# EUROPÄISCHE PATENTANMELDUNG

(11) **EP 0 911 901 A1**
(43) Veröffentlichungstag der Anmeldung: **28.04.1999**
(21) Anmeldenummer: 98116148.2
(22) Anmeldetag: 27.08.1998
(51) Int. Cl.: H01M 10/40

(54) **Sekundäre Lithium-Ionen-Zelle**

(30) Priorität: 24.10.1997 DE 19747140
(71) Anmelder: VARTA Gerätebatterie GmbH, 30419 Hannover (DE)
(72) Erfinder: Praas, Hans-Walter, Dr., 73479 Ellwangen-Schrezheim (DE); Oberhauser, Johanna, 65779 Kelkheim (DE)
(74) Vertreter: Kaiser, Dieter Ralf, Dipl.-Ing.

(57) **Zusammenfassung**

Die Erfindung betrifft eine sekundäre Lithium-Ionen-Zelle mit einer guten Strombelastbarkeit und einem geringen Kapazitätsverlust nach einer Hochtemperaturlagerung, die einen Elektrolyt aus der Lösung eines Lithiumsalzes in einem organischen Lösemittelgemisch besitzt, welches
20 bis 40 Vol.% Ethylencarbonat,
15 bis 30 Vol.% Diethylcarbonat und
35 bis 55 Vol.% Propylencarbonat
enthält.

## Beschreibung

Die Erfindung betrifft eine sekundäre Lithium-Ionen-Zelle mit einer guten Strombelastbarkeit und einem geringen Kapazitätsverlust nach einer Hochtemperaturlagerung.

Aus dem Dokument US-A 5,472,809 ist eine Lithium-Ionen-Zelle bekannt, bei der ein ternäres organisches Lösungsmittelgemisch, bestehend aus 5 - 40 vol.% Propylencarbonat (PC), 10 - 20 vol.% Ethylencarbonat (EC) und 50 - 85 vol.% Dimethylcarbonat (DMC) mit einem darin gelösten Lithium-Ionen enthaltenden Leitsalz als Elektrolyt eingesetzt wird. Als Leitsalze werden vorgeschlagen: Lithiumhexafluoroarsenat (LiAsF₆), Lithiumhexafluorophosphat (LiPF₆), Lithiumtetrafluoroborat (LiBF₄), Lithiumperchlorat (LiClO₄), Lithiumtrifluoromethansulfat (LiCF₃SO₃), Lithium bis(trifluoromethansulfon)imid (LiN(CF₃SO₂)₂) oder Lithium bis(trifluoromethansulfon)methid (LiC(CF₃SO₂)₃) bzw. Mischungen daraus. Die vorbekannten Elektrolyte sollen vor allem die Entladefähigkeit von Lithium-Ionen-Zellen bei tiefen Temperaturen gewährleisten.

Weiterhin ist aus dem Dokument EP-A 643433 bekannt, einen LiPF₆-haltigen Elektrolyten für Lithium-Ionen-Zellen dadurch herzustellen, daß Amoniumhexafluorophosphat (NH₄PF₆) in einem Gemisch, bestehend aus 20 vol.% PC, 30 vol.% EC und 50 vol.% Diethylcarbonat (DEC) mit Lithiumhydrid umgesetzt werden.

In dem Dokument EP-A 312236, welches als Elektrolyt für nichtwäßrige Zellen ein Lösungsmittelgemisch bestehend, aus EC, PC und einem Polyethylenglycoldialkylether offenbart, wird als Vergleichsbeispiel ein Lösungsmittelgemisch bestehend aus 40 mol% PC, 40 mol% EC und 20 mol% DEC angegeben.

Im Hinblick auf die entnehmbare Kapazität aus Zellen, die die vorgenannten Elektrolyten enthalten bzw. auf deren Belastbarkeit, bestehen jedoch weiterhin Anforderungen nach Verbesserungen. Unter Belastbarkeit wird dabei die Entladung der Zellen mit höheren Stromstärken beziehungsweise Stromdichten verstanden.

Die Erfindung hat sich die Aufgabe gestellt, eine sekundäre Lithium-Ionen-Zelle anzugeben, die eine gute Hochtemperaturlagerstabilität und eine verbesserte Belastbarkeit besitzt.

Erfindungsgemäß wird die Aufgabe für die im Oberbegriff gattungsgemäß angegebene Zelle durch die kennzeichnden Merkmale des Anspruchs 1 gelöst. Die Anteile der einzelnen Lösungsmittel im erfindungsgemäßen Elektrolyt ergänzen sich dabei zu 100%.

Weitere vorteilhafte Ausgestaltungen der Erfindung sind in den Ansprüchen 2 bis 5 dargelegt.

Wie anhand der nachfolgenden Beispiele sowie Vergleichsbeispiele gezeigt wird, zeigen die Lithium-Ionen-Zellen mit dem erfindungsgemäßen Elektrolyten einen geringeren Kapazitätsverlust nach einer Lagerung bei 60°C über einen Zeitraum von 7 Tagen. Dabei ist die entnehmbare Kapazität aus den erfindungemäß hergestellten Zellen sowohl nach einer Lagerung im geladenen als auch nach Lagerung im ungeladenen Zustand gegenüber den Vergleichszellen höher. Darüber hinaus weisen die erfindungsgemäßen Zellen eine höhere Belastbarkeit auf, die sich in der höheren entnehmbaren Kapazität bei größeren Entladestromstärken zeigt. Es wurde außerdem gefunden, daß die erfindungsgemäßen Lithium-Ionen-Zellen trotz Entladung bis auf 0 V mehr als 100 mal ge- und entladen werden können, bis die entnehmbare Kapazität auf einen Wert < 70% der Anfangskapazität sinkt. Die erfindungsgemäßen Zellen weisen somit eine sehr gute Tiefentladefestigkeit auf.

Die Erfindung wird nachfolgend anhand von Beispielen und 4 Figuren sowie einer Tabelle näher dargestellt.

Es zeigen:
Figur 1
   den Vergleich der entnehmbaren Kapazitäten aus den Zellen gemäß Bei spiel 1 (■), 2 (x) und Vergleichsbeispiel 1 (◆) in Abhängigkeit von der Entladestromstärke.
Figur 2
   die in Zellen gemäß Beispiel 1 eingeladenen (▲) und entnommenen Kapazitäten in Abhängigkeit von der Zyklenzahl (z), wobei die gestrichelte Kurve (◆) die entnommene Kapazität bis zu einer Entladeschlußspannung von 1,8 V darstellt und die gepunktete Kurve (x) die zusätzlich entnommene Kapazität bei einer Entladung bis 0 V zeigt.
Figur 3
   die eingeladenen und entnommenen Kapazitäten für die Zellen ge mäß Beispiel 2.
Figur 4
   die Entladekapazität der Zellen gemäß dem Beispiel 3 (x) und Beispiel 4 (▲) in Abhängigkeit von der Zyklenzahl (z).

### Beispiel 1

In einer Knopfzelle mit einem Außendurchmesser von 6,8 mm und einer Höhe von 2,1 mm werden eine in Nickel-Foam einpastierte Graphitanode (⌀ 4,20 mm, Höhe 0,71 mm), ein 200 µm dicker Polypropylen-Separator und eine Lithumoxid-haltige Kathode eingebracht. Als Elektrolyt werden 18 µl einer 1 molaren Lösung von LiClO₄ in einem organischen Lösungsmittelgemisch, bestehend aus 30 vol.% EC, 20 vol.% DEC und 50 vol.% PC zugefügt. Die Zellen werden verschlossen und hinsichtlich ihrer Kapazität vor und nach Hochtemperaturlagerung, ihrer Belastbarkeit und Tiefentladbarkeit getestet.

### Beispiel 2

Gemäß Beispiel 1 werden Knopfzellen hergestellt mit dem Unterschied, daß als Leitsalz LiPF₆ verwendet wird.

### Vergleichsbeispiel 1

Analog Beispiel 1 hergestellte Knopfzellen enthalten als Elektrolyten eine 1 molare Lösung von LiClO₄ in einem Lösungmittelgemisch bestehend aus 25 vol.% EC, 10 vol.% DEC und 65 vol.% Ethylmethylcarbonat (EMC).

### Beispiel 3

In ein Knopfzellengehäuse mit einem Durchmesser von 6,8 mm und einer Höhe von 2,1 mm wird eine Ronde aus einer 0,31 mm dicken Lithiumfolie und eine in Nickel-Foam pastierte Graphitanode eingelegt. Als Separator dient eine 200 µm starker Polypropylen-Separator und als Kathode wird eine Lithiumspinell-haltige Elektrode eingesetzt. Der Elektrolyt besteht aus einer 1 molaren Lösung von LiPF₆ in einem organischen Lösemittelgemisch, bestehend aus 30 vol.% EC, 20 vol.% DEC und 50 vol.% PC.

### Beispiel 4

Analog Beispiel 3 werden Knopfzellen hergestellt mit dem Unterschied, daß eine 0,25 mm dicke Lithiumfolie verwendet wird.

### Vergleichsbeispiel 2

Analog Beispiel 4 werden Knopfzellen hergestellt, wobei als Elektrolyt eine 1 molare Lösung von LiPF₆ in 15 vol.% EC, 50 vol.% DMC und 35 vol.% PC verwendet wird.

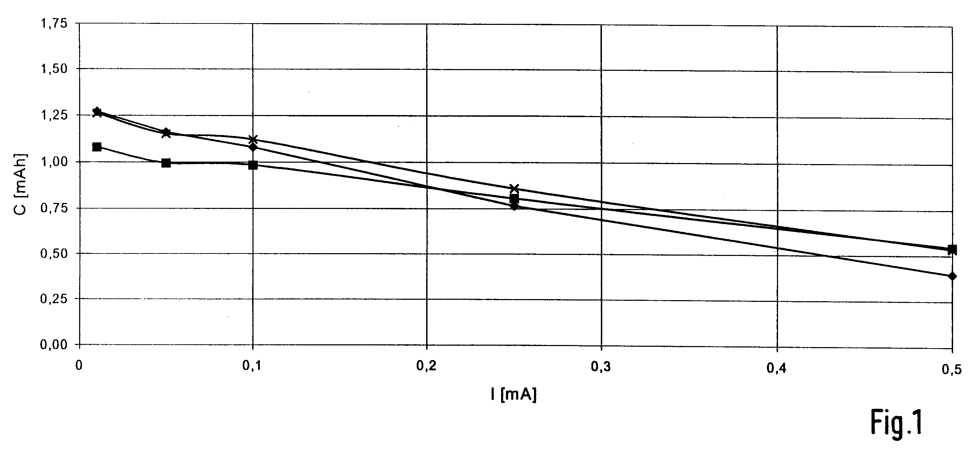

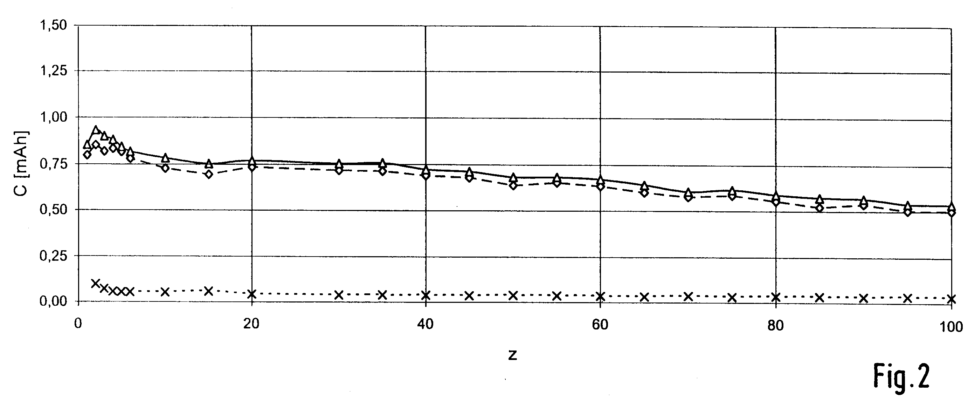

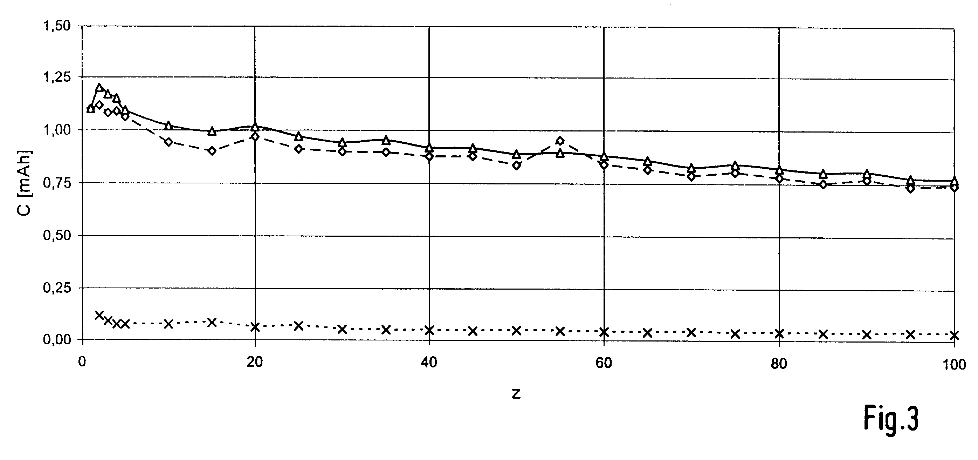

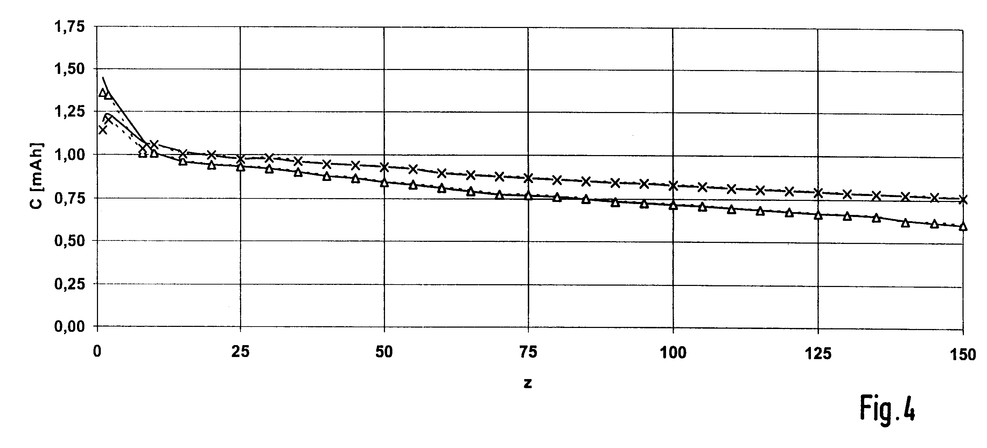

Wie Figur 1 zeigt, weisen die erfindungsgemäß hergestellten Zellen eine höhere entnehmbare Kapazität auch bei größeren Entladestromstärken auf. Die Figuren 2 und 3 zeigen die überraschende Tiefentladefestigkeit der erfindungsgemäßen Zellen. In Tabelle 1 sind die entnehmbaren Kapazitäten nach den erfindungsgemäßen und den Vergleichsbeispielen enthalten. Dabei zeigt sich beim Vergleich des relativen Kapazitätsverlustes nach einer Hochtemperaturlagerung, daß die erfindungsgemäßen Zellen einen geringeren irreversiblen Kapazitätsverlust erleiden.

**Tabelle 1**

| **Entladekapazitäten C in [mAh]** | | | | | | | |
|---|---|---|---|---|---|---|---|
| Versuch Nr. | ohne HT-Lagerung | | nach HT-Lagerung | | direkte HT-Lagerung | | rel. C-Verlust [%] |
| | 1. Zyklus | 2. Zyklus | 1. Zyklus | 2. Zyklus | 1. Zyklus | 2. Zyklus | |
| B1 | 1,142 | 1,136 | 0,906 | 0,898 | 0,891 | 0,881 | 20,95 |
| B2 | 1,161 | 1,154 | 0,992 | 0,997 | 1,032 | 1,008 | 13,60 |
| V1 | 1,194 | 1,192 | 0,470 | 0,171 | 0,470 | 0,102 | 85,65 |
| B3 | 1,247 | 1,202 | 0,757 | 0,822 | 0,891 | 0,916 | 31,61 |
| B4 | 1,112 | 1,122 | 0,636 | 0,732 | 0,663 | 0,732 | 39,76 |
| V2 | 1,410 | 1,402 | 0,364 | 0,493 | n. b. | n. b. | 64,84 |
| n. b. nicht bestimmt | | | | | | | |

## Patentansprüche

1. Sekundäre Lithium-Ionen-Zelle mit einem kohlenstoffhaltigen Anodenmaterial, einem lithiumhaltigen Kathodenmaterial und einem nichtwäßrigen Elektrolyt, dadurch gekennzeichnet, daß der Elektrolyt aus der Lösung eines Lithiumsalzes in einem organischen Lösemittelgemisch besteht, welches
20 bis 40 Vol.% Ethylencarbonat,
15 bis 30 Vol.% Diethylcarbonat und
35 bis 55 Vol.% Propylencarbonat
enthält.

2. Sekundäre Lithium-Ionen-Zelle nach Anspruch 1, dadurch gekennzeichnet, daß das Lösemittelgemisch aus
25 bis 35 Vol.% Ethylencarbonat,
20 bis 25 Vol.% Diethylcarbonat und
40 bis 50 Vol.% Propylencarbonat
besteht.

3. Sekundäre Lithium-Ionen-Zelle nach Anspruch 1 und/oder Anspruch 2, dadurch gekennzeichnet, daß der Elektrolyt 0,9 bis 2,0 mol/l LiClO_{4 ,} LiPF₆ _{,} LiSO₃CF₃, LiBF₄, LiN(CF₃SO₂)₃ oder LiC(CF₃ SO₂)₃ enthält.

4. Sekundäre Lithium-Ionen-Zelle nach Anspruch 3, dadurch gekennzeichnet, daß der Elektrolyt 0,9 bis 1,5 mol/l LiClO₄ oder LiPF₆ enthält.

5. Sekundäre Lithium-Ionen-Zelle nach einem oder mehreren der Ansprüche 1 bis 4, dadurch gekennzeichnet, daß das kohlenstoffhaltigen Anodenmaterial mit einer metallischen Ableitermatrix versehen ist.

6. Sekundäre Lithium-Ionen-Zelle nach Anspruch 5, dadurch gekennzeichnet, daß die metallische Ableitermatrix ein Edelstahlband, ein Nickelstreckmetall oder ein Nickelfoam ist.

7. Sekundäre Lithium-Ionen-Zelle nach einem oder mehreren der Ansprüche 1 bis 4, dadurch gekennzeichnet, daß das lithiumhaltigen Kathodenmaterial ein lithiierter Braunstein oder ein Lithium-Mangan-Spinell ist.
